# EUROPÄISCHE PATENTSCHRIFT

(11) **EP 2 368 144 B1**
(45) Veröffentlichungstag und Bekanntmachung des Hinweises auf die Patenterteilung: **16.01.2013**
(21) Anmeldenummer: 09806169.0
(22) Anmeldetag: 16.12.2009
(51) Int. Cl.: G01V 8/20

(54) **LICHTSCHRANKE UND VERFAHREN ZUM BETRIEB EINER LICHTSCHRANKE**
LIGHT BARRIER AND METHOD FOR THE OPERATION OF A LIGHT BARRIER
BARRIÈRE LUMINEUSE ET PROCÉDÉ POUR FAIRE FONCTIONNER UNE BARRIÈRE LUMINEUSE

(30) Priorität: 24.12.2008 DE 102008063079
(43) Veröffentlichungstag der Anmeldung: 28.09.2011
(73) Patentinhaber: Pantron Instruments GmbH, 31162 Bad Salzdetfurth (DE)
(72) Erfinder: OTTLEBEN, Bernd, 31162 Bad Salzdetfurth (DE); OTTLEBEN, Petra, 31162 Bad Salzdetfurth (DE)
(74) Vertreter: Lins, Edgar
(86) Internationale Anmeldenummer: PCT/DE2009/001773
(87) Internationale Veröffentlichungsnummer: WO 2010/072199

(56) Entgegenhaltungen:
- EP-A2- 1 233 283
- DE-C1- 19 510 304
- US-A- 3 746 863
- US-A- 4 650 990

## Beschreibung

Die Erfindung betrifft eine Lichtschranke mit einer Signalstrecke zwischen einer ersten einen Signalstrahl aussendenden Sender-Empfängeranordnung und einem den auftreffenden Signalstrahl zurücksendenden Spiegel.

Die Erfindung betrifft ferner ein Verfahren zum Betrieb einer Lichtschranke, bei der zwischen zwei Enden einer Signalstrecke Signalstrahlen ausgesandt werden.

Lichtschranken dienen bekanntlich dazu, die Existenz oder den Eintritt eines Objektes in eine lineare Signalstrecke zu erkennen. Im einfachsten Fall besteht eine Lichtschranke aus einem Sender, der ein elektromagnetisches Signal aussendet, und einem Empfänger, der das Signal empfängt. Eine derartige Lichtschranke erfordert eine Sendeelektronik an einem Ende der Signalstrecke und eine Empfängerelektronik am anderen Ende der Signalstrecke. Die beiden Geräte müssen zu Auswertungszwecken miteinander verbunden werden.

In vielen Fällen, insbesondere bei sehr langen Lichtschranken ist es unzweckmäßig, eine elektronische Verbindung zwischen beiden Enden der Signalstrecke herzustellen. In speziellen Anwendungsfällen, beispielsweise in einer großen Fertigungshalle oder in einer Autowaschanlage, wird für die Verbindung der beiden Elektroniken eine aufwändige Kabelverlegung benötigt, da eine direkte Verbindung zwischen Sender- und Empfängerelektronik nicht möglich ist.

Es ist ferner bekannt, eine Lichtschranke so auszubilden, dass an einem Ende der Signalstrecke eine Sender-Empfängeranordnung vorgesehen ist, während am anderen Ende lediglich ein Spiegel benötigt wird, der den ausgesandten Lichtstrahl, vorzugsweise auf derselben optischen Achse, reflektiert, sodass die Sender-Empfängeranordnung den ausgesandten Signalstrahl selbst wieder empfängt und auswerten kann. Auf diese Weise wird nur an einem Ende der Signalstrecke eine Sende- und Empfangselektronik benötigt. Nachteilig an dieser Anordnung ist jedoch, dass durch die Verwendung eines Spiegels die effektive Signalstrecke mehr als verdoppelt wird, sodass bei langen Signalstrecken eine nicht mehr tolerierbare Signaldämpfung eintreten kann. Nachteilig ist ferner, dass ein spiegelndes Objekt unter Umständen nicht erkannt wird, da es die Funktion des Spiegels der Lichtschranke erfüllt und daher die Unterbrechung der Signalstrecke durch das Objekt an der Empfangselektronik nicht erkennbar ist.

Aus der EP 1 233 283 A2 ist eine optoelektronische Vorrichtung bekannt, mit der ein bidirektionaler Datenaustausch erreicht werden kann. Dies ist insbesondere bei der Justage einer derartigen Vorrichtung von Vorteil, wenn sich Sender und Empfänger relativ weit voneinander entfernt befinden. Bei der dort beschriebenen optoelektronischen Vorrichtung sind an beiden Enden der optischen Übertragungsstrecke jeweils ein Sender und ein Empfänger vorgesehen. Dabei sendet der erste Sender sein optisches Signal zum ersten Empfänger. Die vom ersten Empfänger empfangene Intensität des optischen Signals hängt insbesondere davon ab, wie gut der erste Sender und der erste Empfänger aufeinander eingestellt sind. Die empfangene Lichtintensität wird durch einen am ersten Empfänger vorgesehenen Prozessor auf ein vom zweiten Sender übertragenes Signal aufmoduliert und zum zweiten Empfänger gesendet, der sich in einer Baueinheit mit dem ersten Sender befindet. Auch in dieser Baueinheit befindet sich ein Prozessor, der die so auf das Signal aufkodierten Daten ausliest und die am ersten Empfänger eingegangene Lichtintensität an einer Anzeigevorrichtung anzeigt. Mit Hilfe dieser Anzeige ist es für einen Bediener einfach möglich, Sender und Empfänger in möglichst optimaler Weise aufeinander einzustellen.

Die US 4,650,990 offenbart ein Lichtschrankensystem, bei dem mehrere Lichtschranken versetzt voneinander angeordnet sind, um so einen möglichst großen Bereich überwachen zu können. Dabei wird zunächst ein kodiertes Signal, beispielsweise "00" von der ersten Seite auf die zweite Seite der Überwachungsvorrichtung gesendet. Wird dieses Signal am dortigen Empfänger empfangen, wird ein auf der zweiten Seite befindlicher zweiter Sender so angesteuert, dass er ebenfalls ein kodiertes Signal, beispielsweise "11", aussendet, Auf diese Weise ist es möglich, die Signale unterschiedlicher Lichtschranken voneinander zu unterscheiden und so festzustellen, im Signalpfad welcher Lichtschranke sich ein Objekt befindet.

Der vorliegenden Erfindung liegt die Aufgabe zugrunde, eine Lichtschranke so auszubilden und zu betreiben, dass einerseits eine leichte Installierbarkeit ohne eine komplizierte Kabelverlegung zwischen den Enden der Signalstrecke erreichbar ist und andererseits auch unter ungünstigen Umgebungsbedingungen ein angepasstes Aussenden des Signalstrahls auf der einen Seite und eine gute Erkennbarkeit auf der anderen Seite gegeben ist.

Zur Lösung dieser Aufgabe ist erfindungsgemäß eine Lichtschranke der eingangs erwähnten Art dadurch gekennzeichnet, dass der Spiegel als zweite Sende-Empfängeranordnung ausgebildet ist und dass beide Sender-Empfängeranordnungen einen Empfänger, einen steuerbaren und codierbaren Sender und eine an den Empfänger angeschlossene Auswerte- und Steuerungseinrichtung zur Auswertung der Intensität und einer Codierung des empfangenen Signalstrahls und zur Steuerung der Intensität und Codierung mit einer Information über die Intensität des empfangenen Signalstrahls und zum Einstellen der Intensität des ausgesandten Signalstrahls in Abhängigkeit der Codierung des empfangenen Signalstrahls aufweisen.

Zur Lösung der Aufgabe ist ferner ein Verfahren der eingangs erwähnten Art erfindungsgemäß dadurch gekennzeichnet, dass an beiden Enden der Signalstrecke eine Sender-Empfängeranordnung angeordnet wird, dass beide Sender-Empfängeranordnungen einen Signalstrahl aussenden und den von der anderen Sender-Empfängeranordnung ausgesandten Signalstrahl empfangen, dass beide Sender-Empfängeranordnungen die Signalintensität des empfangenen Signalstrahls bestimmen und den eigenen ausgesandten Signalstrahl mit einer Codierung über die empfangene Signalintensität versehen und dass beide Sender-Empfängeranordnungen die Intensität des von ihnen ausgesandten Signalstrahls in Abhängigkeit von der Codierung in den empfangenen Signalstrahl einstellen, wobei ein geeigneter Regelalgorithmus für eine Regelung verwendet werden kann.

Die Erfindung beruht darauf, dass an beiden Enden der Signalstrecke eine Sender-Empfängeranordnung vorgesehen ist, die jeweils mit einer Auswertungs- und Steuerungseinrichtung versehen ist. Ein Auswertungsteil der Auswertungs- und Steuerungseinrichtung ist einerseits in der Lage, die Intensität des empfangenen Signalstrahls zu bestimmen und andererseits eine in dem empfangenen Signalstrahl enthaltene Codierung über die am anderen Ende der Signalstrecke von der anderen Signal-Empfängeranordnung gemessene Intensität des dort empfangenen Signalstrahls zu decodieren. Mit dem Steuerungsteil der Auswertungs- und Steuerungseinrichtung wird dann gemäß der vorgenommenen Decodierung die Signalstärke des ausgesandten Strahls eingestellt und darüber hinaus eine Codierung des ausgesandten Signalstrahls vorgenommen, um die Information über die Intensität des empfangenen Signalstrahls zu übermitteln. Da diese Informationsübermittlung und - auswertung an beiden Enden der Signalstrecke vorgenommen wird, ergibt sich eine vollständige Regelung der auf der Signalstrecke übermittelten Signalstrahlen, sodass die erfindungsgemäße Lichtschranke an ungünstige Umgebungsbedingungen, beispielsweise einen wechselnden Staubgehalt in der Luft der Signalstrecke, automatisch angepasst wird. Zur Erkennung einer Unterbrechung des Signalstrahls kann die Intensität des empfangenen Signals mit einem Schwellwert verglichen werden. In einer Ausführungsform der Erfindung kann mit der erkannten und ausgewerteten Intensität eine Ausgangs-Schaltstufe des Senders gesteuert werden, um das ausgesandte Signal mit einer entsprechenden Codierung für die empfangene Signalstärke zu versehen. Durch diese Regelung der Sender-Empfängeranordnungen ist es möglich, eine vollständige Unterbrechung der Signalstrahlen zu erkennen und anzuzeigen.

Die beiden Sender-Empfängeranordnungen können die Signalstrahlen kontinuierlich aussenden, wenn sie Signalstrahlen mit unterschiedlicher Frequenz verwenden. In diesem Fall kann die Codierung in einer Frequenzänderung des ausgesandten Signals um eine vorgegebene Mittenfrequenz herum erfolgen. Selbstverständlich ist es auch möglich, dass beide Sender-Empfängeranordnungen Signalstrahlen mit unterschiedlichen Trägerfrequenzen aussenden und die Codierung auf die Trägerfrequenzen aufmoduliert wird.

Bevorzugt ist es jedoch, wenn die beiden Sender-Empfängeranordnungen jeweils Signalstrahlen abwechselnd aussenden, sodass die erste Sender-Empfängeranordnung ein Signal aussendet, während die zweite Sender-Empfängeranordnung eine Sendepause einlegt und umgekehrt. Die Häufigkeit zwischen Senden und Pausieren kann dabei so hoch gewählt werden, dass für die Messzwecke einer Lichtschranke praktisch kontinuierliche Signalstrahlen entstehen. Bei dieser Sendemethode müssen die beiden Sender-Empfängeranordnungen miteinander synchronisiert sein. Die in den Auswertungs- und Steuerungseinrichtungen der Sender-Empfängeranordnungen vorhandenen Prozessoren müssen also mit ihrem Arbeitstakt aufeinander eingestellt sein. Dies geschieht vorzugsweise dadurch, dass eine erste Sender-Empfängeranordnung als Master geschaltet wird und dass die andere Sende-Empfängeranordnung als Slave geschaltet wird, also auf die Taktfrequenz des Masters einstellbar ist.

Für die vorliegende Erfindung ist es bevorzugt, dass beide Sender-Empfängeranordnungen identisch aufgebaut sind und durch eine Einstellung, vorzugsweise einen Einstellschalter, als Master oder als Slave umgeschaltet werden.

Die Erfindung soll im Folgenden anhand von in der Zeichnung dargestellten Ausführungsbeispielen näher erläutert werden. Es zeigen:
- Figur 1: ein Prinzipschaltbild einer Ausführungsform einer erfindungsgemäßen Lichtschranke;
- Figur 2: eine beispielhafte Darstellung einer Mehrzahl von möglichen Signalausbildungen zur Codierung des ausgesandten Signals mit der Information über die empfangene Signalintensität.

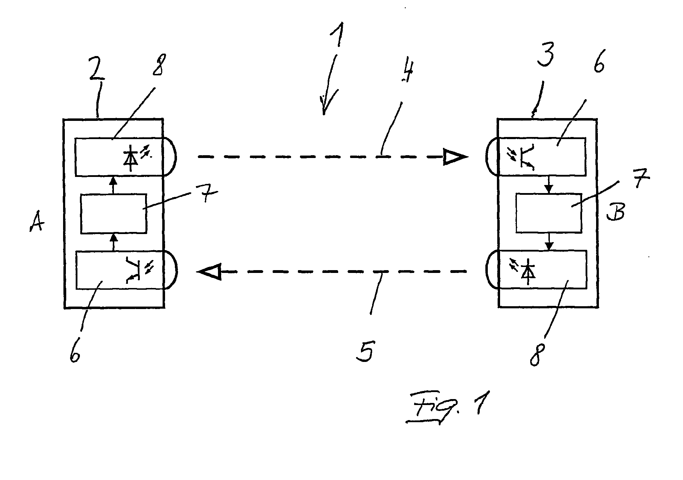

Figur 1 zeigt schematisch eine Signalstrecke 1, an deren Enden sich eine erste Sender-Empfängeranordnung 2 und eine zweite Sender-Empfängeranordnung 3 befindet. Von der ersten Sender-Empfängeranordnung 2 ist ein erster Signalstrahl 4 auf die zweite Sender-Empfängeranordnung 3 gerichtet. In umgekehrter Richtung verläuft ein zweiter Signalstrahl 5 von der zweiten Sender-Empfängeranordnung 3 zur ersten Sender-Empfängeranordnung 2.

Beide Sender-Empfängeranordnungen sind gleich aufgebaut und beinhalten einen Empfänger 6, mit dem der Empfang des jeweiligen Lichtstrahls 4, 5 feststellbar und seine Intensität (Signalstärke) messbar ist. In der Zeichnung ist daher in dem Empfänger ein Zeichen für einen Fototransistor eingezeichnet. Das vom Empfänger 6 empfangene Signal wird auf eine Auswertungs- und Steuerungseinrichtung 7 geleitet, in der sich ein Auswertungsteil und ein Steuerungsteil befinden. Im Auswertungsteil wird die Intensität des vom Empfänger 6 empfangenen Signalstrahls 4,5 bestimmt und für den Steuerungsteil aufbereitet, beispielsweise in Form einer Steuerung einer Ausgangs-Schaltstufe des ausgesandten Lichtstrahls 4, 5 zur Einbringung einer Codierung in den Signalstrahl 4,5. Ferner wird im Auswertungsteil der Auswertungs- und Steuerungseinrichtung 7 eine in dem empfangenen Signalstrahl 4, 5 enthaltene Codierung decodiert und für den Steuerungsteil der Auswertungs- und Steuerungseinrichtung 7 aufbereitet.

An die Auswertungs- und Steuerungseinrichtung 7 ist ein Sender 8 angeschlossen, mit dem ein Signalstrahl ausgesandt werden kann. In der Zeichnung ist der Sender 8 daher mit dem Symbol einer Sendediode gekennzeichnet.

Im Steuerungsteil der Auswertungs- und Steuerungseinrichtung 7 wird die decodierte Codierung aus dem empfangenen Signalstrahl 4, 5 in ein Steuerungssignal für die Intensität des vom Sender 8 ausgesandten Signalstrahls 4, 5 umgewandelt. Ferner wird die festgestellte Intensität des vom Empfänger empfangenen Signalstrahls 4, 5 in eine Codierung umgesetzt, mit der der vom Sender 8 ausgesandte Signalstrahl 4, 5 codiert wird, sodass nach der Übertragung des Signalstrahls 4, 5 die andere Sender-Empfängeranordnung 2, 3 über die Codierung die Information darüber erhält, mit welcher Intensität der von ihrem Sender 8 ausgesandte Signalstrahl 4, 5 von der anderen Sender-Empfängeranordnung 2, 3 empfangen worden ist.

Da beide Sender-Empfängeranordnungen 2, 3 nicht über Signalleitungen miteinander verbunden sind, sondern lediglich an eine geeignete Stromversorgung, die auch eine netzunabhängige Stromversorgung (Batterien) sein kann, angeschlossen sein müssen, wird die Information über die Übertragungsqualität der Signalstrecke 1 über die Codierung der Signalstrahlen 4, 5 auf die jeweils andere Sender-Empfängeranordnung übertragen, woraus die empfangene Sender-Empfängeranordnung 2, 3 die Information entnimmt, mit welcher Signalstärke ihr Sender 8 den Signalstrahl 4, 5 aussenden muss.

Auf diese Weise werden beide Signalstrahlen 4, 5 vollständig geregelt, da die Information über die verbliebene Signalstärke am anderen Ende der Signalstrecke 1 über die Signalstrahlen 4, 5 auf die jeweils andere Sender-Empfängeranordnung 2, 3 übertragen wird.

Um den Regelvorgang beginnen zu lassen, ist es zweckmäßig, dass eine der beiden Sender-Empfängeranordnungen als Master mit einer maximalen Signalstärke auszusenden beginnt oder mit einer sehr geringen, jeweils stufenweise angehobenen Signalsstärke. Auf diese Weise wird in der als Slave arbeitenden Sender-Empfängeranordnung 3 entweder sofort ein (regelmäßig übersteuertes) Signal empfangen, das mit maximaler Signalintensität ausgestrahlt worden ist oder erst nach einer gewissen Zeit ein Signal mit einer minimalen Empfangsstärke empfangen. In beiden Fällen beginnt mit dem Empfang des vom Master ausgesandten Signals der Regelvorgang auf beiden Enden der Signalstrecke 1.

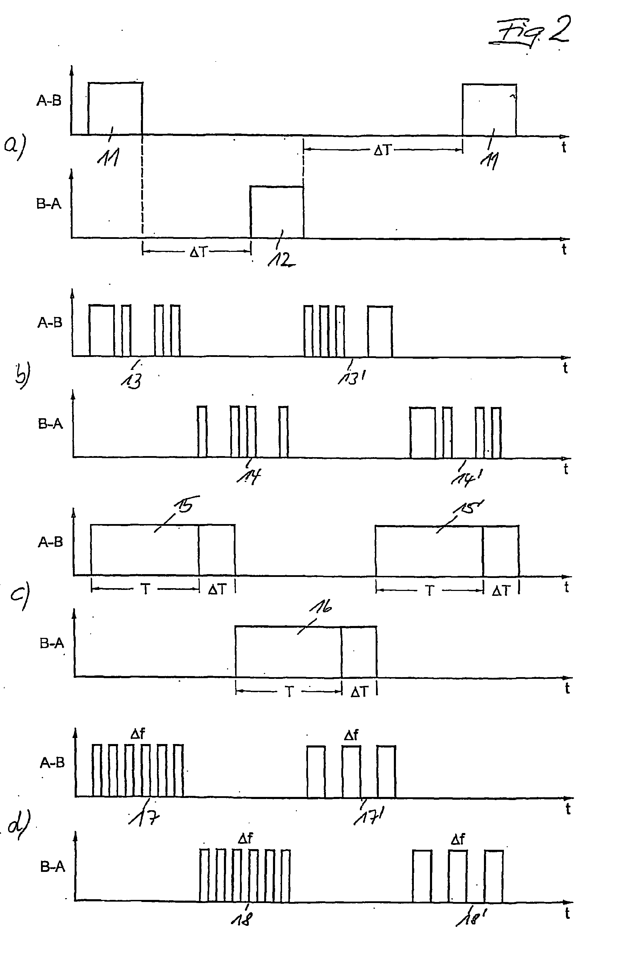

Figur 2 verdeutlicht Signale, die die Signalstrahlen bilden können. Dabei ist das Ende der ersten Sender-Empfängeranordnung 2 mit A und das Ende der Signalstrecke 1 mit der zweiten Sender-Empfängeranordnung 3 mit B bezeichnet. Demzufolge bezeichnet A-B jeweils den ersten Signalstrahl 4 und B-A jeweils den zweiten Signalstrahl 5.

In dem dargestellten Ausführungsbeispiel gemäß Figur 2a wird von der ersten Sender-Empfängeranordnung 2 ein Impulspaket 11 ausgesandt. Je nach der Signalintensität, die vom Empfänger 6 der zweiten Sender-Empfängeranordnung 3 festgestellt worden ist, wird ein Antwort-Impulspaket 12 von dem Sender 8 der zweiten Sender-Empfängeranordnung 3 als Sendestrahl 5 nach einer gewissen Zeitspanne ΔT zurückgesandt. Die Zeitspanne ΔT enthält somit die Codierung über die Signalfeldstärke des Sendesignals 4 am Empfänger 6 der zweiten Sender-Empfängeranordnung 3. Das von der zweiten Sender-Empfängeranordnung 3 ausgesandte Impulspaket 12 wird von dem Empfänger 6 der ersten Sender-Empfängeranordnung 2 empfangen und hinsichtlich der empfangenen Signalintensität ausgewertet. Die Zeitspanne ΔT zwischen dem Signalpaket 11 und dem Signalpaket 12 gibt der ersten Sender-Empfängeranordnung 2 die Information, mit welcher Senderstärke der nächste Signalstrahl 4 ausgesandt werden soll. In Abhängigkeit von der Intensität des empfangenen Signals stellt die erste Sender-Empfängeranordnung 2 den Zeitabstand ΔT ein, zu dem das nächste Impulspaket 11 ausgesandt wird. Die Codierung über die empfangene Signalstärke ist somit in dem zeitlichen Abstand ΔT zwischen dem empfangenen Impulspaket 12 und dem daraufhin ausgesandten Impulspaket 11 enthalten. Auf diese Weise findet eine ständige Regelung der von den beiden Sender-Empfängeranordnungen 2, 3 ausgesandten Sendesignalen bezüglich ihrer Intensität statt.

In dem in Figur 2b dargestellten Ausführungsbeispiel werden digital codierte Signale 13, 13' von der ersten Sender-Empfängeranordnung 2 und digitale Sendesignale 14, 14' von der zweiten Sender-Empfängeranordnung 3 ausgesandt. Die Sendesignale werden dabei verschachtelt ausgesandt, sodass zwischen den digitalen Signalen 13, 13' eine Sendepause besteht, in der ein digitales Signal 14, 14' der anderen Sende-Empfängeranordnung 3 ausgesandt werden kann. Die Erkennung der digitalen Sendesignale 13, 13'; 14, 14' setzt voraus, dass die Prozessoren in den Auswertungs- und Steuerungseinrichtungen 7 der beiden Sender-Empfängeranordnungen 2, 3 miteinander synchronisiert sind.

Bei dem in Figur 2c dargestellten Ausführungsbeispiel werden Impulspakete 15, 15' von der ersten Sender-Empfängeranordnung 2 in einem festen Zeitraster ausgesandt. Verschachtelt hierzu sendet die zweite Sender-Empfängeranordnung Impulspakete 16 ebenfalls in einem festen Zeitraster aus.

Die Codierung über die Intensität des empfangenen Signals liegt dabei in der Länge T des Impulspakets 15, 15', 16 und der Länge des zugehörigen Zeitintervalls ΔT, das die Länge T des Impulspakets 15 zu einer konstanten, vorgegebenen Zeitdauer ergänzt, sodass T+ΔT = const. für alle Impulse 15, 15', 16 ist.

Figur 2d zeigt noch ein Ausführungsbeispiel, in dem Impulspakete 17, 17' der Länge T von der ersten Sender-Empfängeranordnung 2 und Impulspakete 18, 18' von der zweiten Sender-Empfängeranordnung 3 ausgesandt werden. Die Impulspakete haben eine konstante Impulspaketlänge. Die Information über die empfangene Signalintensität liegt in der Anzahl der Impulse pro Impulspaket bzw. in der Frequenz, mit der die Impulse in den Impulspaket auftreten.

Während das Impulspaket 17 in dem dargestellten Ausführungsbeispiel sechs Impulse aufweist, sind im Impulspaket 17' nur drei Impulse enthalten. Die Auswertung kann über die Zählung der Impulse über die vorgegebene Impulspaketlänge oder über die Bestimmung der Impulsfrequenz innerhalb der Impulspakete erfolgen.

In allen Fällen ist unproblematisch und mit herkömmlichen Prozessoren eine Auswertung der Codierung der übersandten elektromagnetischen Signale in den Signalstrahlen 4, 5 möglich.

Die vorliegende Erfindung eignet sich für Lichtschranken aller Art, also für Lichtschranken, die mit sichtbarem Licht arbeiten oder auch mit Infrarotstrahlung oder Ultraviolettstrahlung.

## Patentansprüche

1. Lichtschranke mit einer Signalstrecke (1) zwischen einer ersten, einen Signalstrahl (4) aussendenden Sender-Empfängeranordnung (2) und einem den auftreffenden Signalstrahl (4) zurücksendenden Spiegel, wobei der Spiegel als zweite Sender-Empfängeranordnung (3) ausgebildet ist und dass beide Sender-Empfängeranordnungen (2, 3) einen Empfänger (6), einen steuerbaren und codierbaren Sender (8) und eine an den Empfänger (6) angeschlossene Auswertungs- und Steuerungseinrichtung (7) zur Auswertung der Intensität und einer Codierung des empfangenen Signalstrahls (4, 5) aufweisen, **dadurch gekennzeichnet, dass** die Auswertungs- und Steuerungseinheit zur Steuerung der Intensität und Codierung des ausgesandten Signalstrahls (4, 5) vorgesehen ist, wobei die Codierung mit einer Information über die Intensität des empfangenen Signalstrahls (4, 5) erfolgt und wobei die Intensität des ausgesandten Signalstrahls in Abhängigkeit der Codierung des empfangenen Signalstrahls eingestellt wird.

2. Lichtschranke nach Anspruch 1, wobei die beiden Sender-Empfängeranordnungen (2, 3) zur Aussendung unterschiedlicher Signale eingerichtet sind.

3. Lichtschranke nach Anspruch 2, wobei die beiden Sender-Empfängeranordnungen (2, 3) Signale unterschiedlicher Frequenzen aussenden.

4. Lichtschranke nach Anspruch 3, wobei die Signalstrahlen mit Codiersignalen moduliert sind.

5. Lichtschranke nach Anspruch 4, wobei die Frequenzen der ausgesandten Signalstrahlen (4, 5) innerhalb eines vorgegebenen Frequenzbereichs zur Codierung variierbar sind.

6. Lichtschranke nach einem der Ansprüche 1 bis 5, wobei die Sender-Empfängeranordnungen (2, 3) aufeinander synchronisierbar sind und dass die erste Sender-Empfängeranordnung (2) als Master und die zweite Sender-Empfängeranordnung (3) als Slave eingerichtet sind.

7. Lichtschranke nach Anspruch 6, wobei beide Sender-Empfängeranordnungen (2, 3) als Master oder Slave umschaltbar ausgebildet sind.

8. Lichtschranke nach Anspruch 6 oder 7, wobei die von den beiden Sender-Empfängeranordnungen (2, 3) ausgesandten Signalstrahlen (4, 5) Impulssignale aufweisen, die die Codierung beinhalten.

9. Lichtschranke nach Anspruch 8, wobei die Codierung in der Einstellung von Impulslänge, Impulsabstand, Impulspaketlänge, Impulspaketabstand und/oder Impulsfrequenz besteht.

10. Lichtschranke nach Anspruch 8 oder 9, wobei die Aussendung des Signalstrahls (4) der ersten Sender-Empfängeranordnung (2) und des Signalstrahls (5) der zweiten Sender-Empfängeranordnung (3) abwechselnd erfolgt.

11. Lichtschranke nach einem der Ansprüche 8 bis 10, wobei der ausgesandte Signalstrahl (4, 5) aus aneinandergereihten Signalen besteht.

12. Verfahren zum Betrieb einer Lichtschranke, bei der zwischen zwei Enden (A, B) ihrer Signalstrecke (1) Signalstrahlen (4, 5) ausgesandt werden, **dadurch gekennzeichnet, dass** an beiden Enden (A, B) der Signalstrecke (1) eine Sender-Empfängeranordnung (2, 3) angeordnet wird, dass beide Sender-Empfängeranordnungen (2, 3) einen Signalstrahl (4, 5) aussenden und den von der anderen Sender-Empfängeranordnung (2, 3) ausgesandten Signalstrahl (4, 5) empfangen, dass beide Sender-Empfängeranordnungen (4, 5) die Signalintensität des empfangenen Signalstrahls (4, 5) bestimmen und den eigenen ausgesandten Signalstrahl (4, 5) mit einer Codierung über die empfangene Signalintensität versehen und dass beide Sender-Empfängeranordnung (2, 3) die Intensität des von ihnen ausgesandten Signalstrahls (4, 5) in Abhängigkeit von der Codierung in dem empfangenen Signalstrahl (4, 5) einstellen.

13. Verfahren nach Anspruch 12, wobei die Signalstrahlen (4, 5) der beiden Sender-Empfängeranordnungen (2, 3) abwechselnd ausgesandt werden.

14. Verfahren nach Anspruch 13, wobei die Signalstrahlen (4, 5) als Impulse oder Impulspakete ausgesandt werden und dass die Codierung in der Länge der Impulse oder Impulspakete oder einer Pause zwischen den Impulsen oder Impulspaketen besteht.

15. Verfahren nach Anspruch 13, wobei die Codierung durch digitale Signalfolgen vorgenommen wird.

16. Verfahren nach Anspruch 12 oder 13, wobei die Signalstrahlen (4, 5) als Wechselspannungssignale ausgesandt werden und die Codierung durch eine Änderung der Frequenz der Wechselspannungssignale erfolgt.

17. Verfahren nach Anspruch 12, wobei Signalstrahlen (4, 5) mit unterschiedlichen Wellenlängen ausgesandt werden.

18. Verfahren nach Anspruch 17, wobei die Signalstrahlen (4, 5) gleichzeitig ausgesandt werden.

## Claims

1. A light barrier having a signal path (1) between a first transceiver arrangement (2), which emits a signal beam (4), and a reflecting device which returns the incident signal beam (4), the reflecting device being in the form of a second transceiver arrangement (3) and the two transceiver arrangements (2, 3) having a receiver (6), a controllable and codable transmitter (8) and an evaluation and control device (7) which is connected to the receiver (6) and is intended to evaluate the intensity and coding of the received signal beam (4, 5), **characterized in that** the evaluation and control device is provided for controlling the intensity and coding of the emitted signal beam (4, 5), the coding being effected using an item of information relating to the intensity of the received signal beam (4, 5) and the intensity of the emitted signal beam being set on the basis of the coding of the received signal beam.

2. The light barrier according to claim 1, wherein the two transceiver arrangements (2, 3) are set up to emit different signals.

3. The light barrier according to claim 2, wherein the two transceiver arrangements (2, 3) emit signals at different frequencies.

4. The light barrier according to claim 3, wherein the signal beams are modulated with coding signals.

5. The light barrier according to claim 4, wherein the frequencies of the emitted signal beams (4, 5) can be varied within a predefined coding frequency range.

6. The light barrier according to one of claims 1 to 5, wherein the transceiver arrangements (2, 3) can be synchronized with one another, and the first transceiver arrangement (2) is set up as a master and the second transceiver arrangement (3) is set up as a slave.

7. The light barrier according to claim 6, wherein the two transceiver arrangements (2, 3) can be changed over as master or slave.

8. The light barrier according to claim 6 or 7, wherein the signal beams (4, 5) emitted by the two transceiver arrangements (2, 3) have pulse signals which comprise the coding.

9. The light barrier according to claim 8, wherein the coding involves setting the pulse length, pulse spacing, pulse packet length, pulse packet spacing and/or pulse frequency.

10. The light barrier according to claim 8 or 9, wherein the signal beam (4) from the first transceiver arrangement (2) and the signal beam (5) from the second transceiver arrangement (3) are emitted alternately.

11. The light barrier according to one of claims 8 to 10, wherein the emitted signal beam (4, 5) consists of concatenated signals.

12. A method for operating a light barrier in which signal beams (4, 5) are emitted between two ends (A, B) of its signal path (1), **characterized in that** a transceiver arrangement (2, 3) is arranged at both ends (A, B) of the signal path (1), **in that** the two transceiver arrangements (2, 3) emit a signal beam (4, 5) and receive the signal beam (4, 5) emitted by the other transceiver arrangement (2, 3), **in that** the two transceiver arrangements (4, 5) determine the signal intensity of the received signal beam (4, 5) and provide their own emitted signal beam (4, 5) with coding using the received signal intensity, and **in that** the two transceiver arrangements (2, 3) set the intensity of the signal beam (4, 5) emitted by them on the basis of the coding in the received signal beam (4, 5).

13. The method according to claim 12, wherein the signal beams (4, 5) from the two transceiver arrangements (2, 3) are alternately emitted.

14. The method according to claim 13, wherein the signal beams (4, 5) are emitted in the form of pulses or pulse packets, and the coding consists of the length of the pulses or pulse packets or a pause between the pulses or pulse packets.

15. The method according to claim 13, wherein the coding is carried out by means of digital signal sequences.

16. The method according to claim 12 or 13, wherein the signal beams (4, 5) are emitted in the form of AC voltage signals, and the coding is effected by changing the frequency of the AC voltage signals.

17. The method according to claim 12, wherein the signal beams (4, 5) are emitted at different wavelengths.

18. The method according to claim 17, wherein the signal beams (4, 5) are emitted at the same time.

## Revendications

1. Barrière lumineuse comprenant un trajet de signal (1) entre un premier agencement d'émission et réception (2) émettant un faisceau signal (4), et un miroir renvoyant le faisceau signal (4) incident, le miroir étant constitué par un deuxième agencement d'émission et réception (3), et les deux agencements d'émission et réception (2, 3) présentant un récepteur (6), un émetteur (8) pilotable et apte à encoder, et un dispositif de pilotage et d'exploitation (7) raccordé au récepteur (6) pour exploiter l'intensité et un codage du faisceau signal (4, 5) reçu, **caractérisée en ce que** l'unité de pilotage et d'exploitation est prévue pour piloter l'intensité et le codage du faisceau signal (4, 5) émis, le codage s'effectuant à l'aide d'une information sur l'intensité du faisceau signal (4, 5) reçu et l'intensité du faisceau signal émis étant réglée en fonction du codage du faisceau signal reçu.

2. Barrière lumineuse selon la revendication 1, dans laquelle les deux agencements d'émission et réception (2, 3) sont agencés pour l'émission de différents signaux.

3. Barrière lumineuse selon la revendication 2, dans laquelle les deux agencements d'émission et réception (2, 3) émettent des signaux de fréquences différentes.

4. Barrière lumineuse selon la revendication 3, dans laquelle les faisceaux signal sont modulés avec des signaux de codage.

5. Barrière lumineuse selon la revendication 4, dans laquelle, pour le codage, les fréquences des faisceaux signal (4, 5) émis sont variables à l'intérieur d'une plage de fréquence prédéterminée.

6. Barrière lumineuse selon l'une quelconque des revendications 1 à 5, dans laquelle les agencements d'émission et réception (2, 3) sont synchronisables l'un par rapport à l'autre, et le premier agencement d'émission et réception (2) est agencé comme maître et le deuxième agencement d'émission et réception (3) comme esclave.

7. Barrière lumineuse selon la revendication 6, dans laquelle les deux agencements d'émission et réception (2, 3) sont formés commutables en maître ou esclave.

8. Barrière lumineuse selon la revendication 6 ou 7, dans laquelle les faisceaux signal (4, 5) émis par les deux agencements d'émission et réception (2, 3) présentent des impulsions qui renferment le codage.

9. Barrière lumineuse selon la revendication 8, dans laquelle le codage est formé par le réglage de la longueur d'impulsion, l'intervalle entre deux impulsions, la longueur de train d'impulsions, l'intervalle entre deux trains d'impulsions et/ou la fréquence d'impulsion.

10. Barrière lumineuse selon la revendication 8 ou 9, dans laquelle l'émission du faisceau signal (4) par le premier agencement d'émission et réception (2) et du faisceau signal (5) par le deuxième agencement d'émission et réception (3) s'effectue à tour de rôle.

11. Barrière lumineuse selon l'une quelconque des revendications 8 à 10, dans laquelle le faisceau signal (4, 5) consiste en des faisceaux signal (4, 5) se succédant les uns aux autres.

12. Procédé pour faire fonctionner une barrière lumineuse, dans lequel on émet des faisceaux signal (4, 5) entre deux extrémités (A, B) de leur trajet de signal (1), **caractérisé en ce qu'**un agencement d'émission et réception (2, 3) est agencé aux deux extrémités (A, B) du trajet de signal (1), **en ce que** les deux agencements d'émission et réception (2, 3) émettent un faisceau signal (4, 5) et reçoivent le faisceau signal (4, 5) émis par l'autre agencement d'émission et réception (2, 3), **en ce que** les deux agencements d'émission et réception (4, 5) déterminent l'intensité de signal du faisceau signal (4, 5) reçu et les faisceaux signal (4, 5) respectifs émis sont munis d'un codage sur l'intensité de signal reçue, et **en ce que** les deux agencements d'émission et réception (2, 3) règlent l'intensité du faisceau signal (4, 5) émis par eux en fonction du codage dans le faisceau signal (4, 5) reçu.

13. Procédé selon la revendication 12, dans lequel on émet à tour de rôle les faisceaux signal (4, 5) des deux agencements d'émission et réception (2, 3).

14. Procédé selon la revendication 13, dans lequel les faisceaux signal (4, 5) sont émis en tant qu'impulsions ou trains d'impulsions, et le codage est formé par la longueur des impulsions ou des trains d'impulsion ou une interruption entre les impulsions ou les trains d'impulsions.

15. Procédé selon la revendication 13, dans lequel on procède au codage par des séquences de signaux numériques.

16. Procédé selon la revendication 12 ou 13, dans lequel on émet les faisceaux signal (4, 5) formés par des signaux de tension alternative et le codage s'effectue par une modification de la fréquence des signaux de tension alternative.

17. Procédé selon la revendication 12, dans lequel on émet les faisceaux signal (4, 5) à des longueurs d'onde différentes.

18. Procédé selon la revendication 17, dans lequel on émet les faisceaux signal (4, 5) simultanément.
